# EUROPEAN PATENT APPLICATION

(11) **EP 2 878 804 A1**
(43) Date of publication of application: **03.06.2015**
(21) Application number: 14190400.3
(22) Date of filing: 27.10.2014
(51) Int. Cl.: F02M 37/00, F16L 55/04

(54) **Hydraulic damper**

(30) Priority: 06.11.2013 GB 201319578
(71) Applicant: Delphi International Operations Luxembourg S.à r.l., 4940 Bascharage (LU)
(72) Inventor: Voigt, Peter, L-4970 Bettange-sur-Mess (LU)
(74) Representative: Neill, Andrew Peter

(57) **Abstract**

A fluid damper (30) comprising a tubular member within which flows the fluid. The tubular member is shaped to be flexible and to provide a degree of freedom amortizing hydraulic waves propagating in said tubular member.

## Description

### TECHNICAL FIELD

The present invention relates to a fluid damper for a low pressure line of a fuel injection circuit of a vehicle.

### BACKGROUND OF THE INVENTION

In a vehicle, the low pressure lines of the fuel equipment typically extend between the rear and the front. Undesirable noise is generated by hydraulic waves propagating in said circuits. The waves can be amortized in adding costly dampers to the circuits but the market demands simpler devices solving these problems.

### SUMMARY OF THE INVENTION

Accordingly, it is an object of the present invention to provide a fluid damper comprising a tubular member within which flows the fluid. The tubular member is shaped to be flexible and to provide a degree of freedom amortizing hydraulic waves propagating in said tubular member. The shape of the tubular member could be a coil spring or a serpentine made of a series of U-shaped section or V, or square, or sinusoid or other or any combination of said shapes.

The serpentine can be planar or non-planar.

In another embodiment, the tubular member comprises a portion provided with a non-circular cross-section such as elliptic, or oval or any other elongated cross section.

In a third embodiment the tubular member comprises a portion provided with at least one fluid restriction.

The invention is also related to a low pressure circuit of the fuel injection equipment of a vehicle configured to fluidly connect devices distantly arranged from each other. The circuit comprises a fluid damper as set in any of the preceding paragraphs.

The circuit can be the supply line wherein flows low pressure fuel from the vehicle's fuel tank to a high pressure pump. It can also be the return line low pressure fuel from the fuel injectors back to a fuel tank.

In one embodiment the damper is integral to the line. In another embodiment the damper is an add-on feature between an upstream portion of the line and a downstream portion.

The invention is also related to the fuel injection equipment of a vehicle comprising a low pressure fuel line as previously described.

### BRIEF DESCRIPTION OF THE DRAWING

The present invention is now described by way of example with reference to the accompanying figures where:
Figure 1 is sketch of fuel injection equipment.
Figure 2 is sketch of a straight low pressure line.
Figures 3 to 7 are fluid dampers as per a first embodiment of the invention.
Figure 8 is a fluid damper as per a second embodiment of the invention.
Figure 9 is a fluid damper as per a third embodiment of the invention.

### DESCRIPTION OF THE PREFERRED EMBODIMENTS

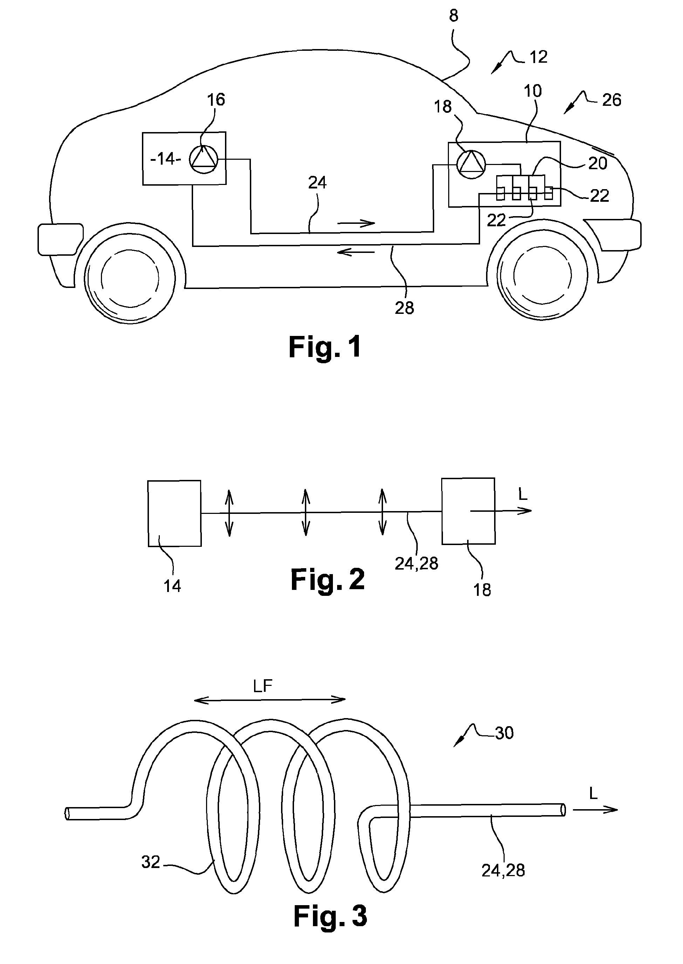

Figure 1 is a non-limiting sketchy representation of a vehicle 8 in which is arranged simplified fuel equipment 12. This is not limited to any specific type of vehicle, or of fuel, and the teachings of the invention are applicable to diesel as well as to gasoline or any other fuel. In the rear of the vehicle 8 are arranged a fuel tank 14 and a low pressure pump 16 and, in the front on the vehicle engine 10, are arranged a high pressure pump 16, a manifold 18 distributing high pressure fuel to a plurality of injectors 20. These components are arranged in fluid communication with each other via a supply low pressure supply line 24 extending from the tank 14 to the high pressure pump 18, a high pressure circuit 26 confined between the high pressure pump 18, the manifold 20 and the injectors 22 and, a return low pressure line 28 as well extending from the front to the rear of the vehicle 8 to flow some fuel back from the injectors 22 to the tank 14.

Numerous variant of fuel equipment 12 exist with vehicles 8 having the engine in the front or in the rear and the fuel tank arranged at the other end. Both supply and return low pressure lines 24, 28, are long extending between the front and the rear of the vehicle 10 and, inside said lines, low pressure fuel flows and propagate hydraulic waves generated for instance by a low pressure pump, or by an injection event.

On figure 2 is sketched a classical low pressure line 24, 28, straightly extending along a longitudinal direction L and which flexibility is limited to transversal displacements perpendicular to the longitudinal direction L.

To overcome said flexibility limitation is represented on figure 3 a first embodiment of the present invention. The low pressure line 24, 28, is provided with a damper 30 formed of a longitudinally flexible LF portion that has the shape of a coil spring 32 with non-contacting spirals. The coil spring 32 enables minor compression-extension longitudinal L movements utilized to damp the hydraulic waves propagating in the line 24, 28.

The damper 30 can be an add-on feature interposed between two parts of the line 24, 28, or can be integrally forms within said line. The damper 30 can be made of a rigid material such as steel, aluminum or hard plastic as well as it can be of softer material such has rubber or soft plastic.

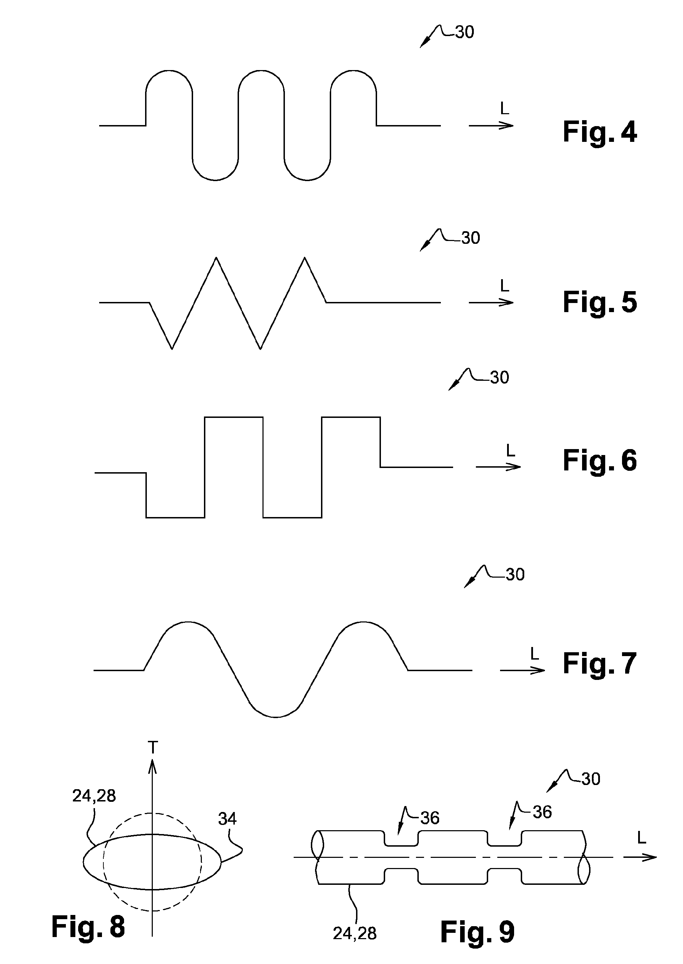

Alternatively to the coil, other shapes can be chosen for the damper 30. For instance in references to figures 4 to 7 are represented serpentine dampers having the base shape of a U, a V, a square or a sinusoid. A non-represented combination of different shapes is also possible. Furthermore, these flexible portions are here represented planar while non-planar arrangement can be made. All these variant of the first embodiment are designed to provide longitudinal flexibility LF to the low pressure line 24, 28.

A hydraulic damper 30 can be formed within the low pressure line according to a second embodiment of the invention now described in reference to figure 8.

Instead of the classical circular cross-section, the low pressure line 24, 28, can be provided with an elliptical cross section 34 as shown on figure 8. Under pressure the elliptical section 34 deforms toward a circular section represented in dotted line then, when a pressure wave occurs, such small transversal T deformation contributes to damping the wave toward a more steady flow. The elliptical section 34 can easily be replaced by an oval or any elongated non-circular section.

A third embodiment of the damper 30 is now described in reference to figure 9. The damper 30 is formed by at least one restriction 36 formed in the low pressure line 24, 28. Figure 10 depicts a damper 30 having two restrictions 36 but any other number is possible.

A damper 30 of course accommodate any combination of the previously described embodiments.

The following list of references is utilized in this description:
- 8: vehicle
- 10: engine
- 12: fuel equipment
- 14: fuel tank
- 16: low pressure pump
- 18: high pressure pump
- 20: common rail
- 22: injectors
- 24: low pressure supply line
- 26: high pressure circuit
- 28: low pressure return line
- 30: flexile portion
- 32: coil shape
- 34: elliptical section
- 36: restriction

- L: longitudinal direction

## Claims

1. Fluid damper (30) comprising a tubular member (30) within which flows the fluid, the tubular member being shaped to be flexible and to provide a degree of freedom amortizing hydraulic waves propagating in said tubular member.

2. Fluid damper (30) as set in the preceding claim wherein the shape of the tubular member (30) is a coil spring.

3. Fluid damper (30) as set in any of the preceding claims wherein the shape of the tubular member (30) is a serpentine.

4. Fluid damper (30) as set in claim 3 wherein the serpentine is made of a series of U-shaped section or V, or square, or sinusoid or other or any combination of said shapes.

5. Fluid damper (30) as set in any of the claims 3 or 4 wherein the serpentine is shaped in a plan.

6. Fluid damper (30) as set in any of the claims 3 or 4 wherein the serpentine is non-planar.

7. Fluid damper (30) as set in any of the preceding claims wherein the tubular member (30) comprises a portion provided with a non-circular cross-section such as elliptic (34) or oval.

8. Fluid damper (30) as set in any of the preceding claims wherein the tubular member (30) comprises a portion provided with at least one fluid restriction (36).

9. Low pressure circuit (24, 28) of the fuel injection equipment (12) of a vehicle (8) configured to fluidly connect devices (14, 16, 18) distantly arranged from each other, the circuit (24, 28) comprising a fluid damper (30) as set in any of the preceding claims.

10. Circuit (24) as set in claim 9 wherein the supply line (24), flowing low pressure fuel from the vehicle's fuel tank (14) to a high pressure pump (18), is provided with a damper (30) as set in any of the preceding claim.

11. Circuit (28) as set in claim 9 or 10 wherein the return line (28), flowing low pressure fuel from the fuel injectors (22) back to a fuel tank (14), is provided with a damper (30) as set in any of the preceding claim.

12. Circuit (24, 28) as set in any of the claims 10 or 11 wherein the damper (30) is integral to the line.

13. Fuel injection equipment (12) of a vehicle (8) comprising a low pressure fuel line (24, 28) as set in any of the claims 9 to 12.
